# FASCICULE DE BREVET EUROPEEN

(11) **EP 1 703 418 B1**
(45) Date de publication et mention de la délivrance du brevet: **11.12.2013**
(21) Numéro de dépôt: 06300213.3
(22) Date de dépôt: 08.03.2006
(51) Int. Cl.: G06F 17/24

(54) **Enrichissement d'une base de règles de transcription**
Transkriptionsregel-Datenbankerweiterung
Transcription rule base enrichment

(30) Priorité: 16.03.2005 FR 0550671
(43) Date de publication de la demande: 20.09.2006
(73) Titulaire: Orange, 75015 Paris (FR)
(72) Inventeur: Lauvergne, Muriel, 22560, Trebeurden (FR); Allemandou, Joseph, 22300, Lannion (FR); Ance, Céline, 22560, Pleumeur Bodou (FR)
(74) Mandataire: Regimbeau

(56) Documents cités:
- EP-A- 1 550 954
- DRAXLER C ED - EUROPEAN SPEECH COMMUNICATION ASSOCIATION (ESCA): "WWWTRANSCRIBE - A MODULAR TRANSCRIPTION SYSTEM BASED ON THE WORLD WIDE WEB" 5TH EUROPEAN CONFERENCE ON SPEECH COMMUNICATION AND TECHNOLOGY. EUROSPEECH '97. RHODES, GREECE, SEPT. 22 - 25, 1997, EUROPEAN CONFERENCE ON SPEECH COMMUNICATION AND TECHNOLOGY. (EUROSPEECH), GRENOBLE : ESCA, FR, vol. 4 OF 5, 22 septembre 1997 (1997-09-22), pages 1691-1694, XP001049191
- KAISER ET AL: "The SpDatLabel Transcription Tool" WORKSHOP ON SPEECHDATABASE DEVELOPMENT FOR CENTRAL AND EASTERN EUROPEAN LANGUAGES, 1998, pages 1-4, XP002293215

## Description

La présente invention concerne l'enrichissement semi-automatique d'une base de données incluant des règles de transcription validant des traces transcrites. Elle concerne également le contrôle de transcription de traces.

La demande de brevet européen 04030380.2 du 22 Décembre 2004 intitulée "Transcription de traces" et publiée comme EP 1 550 954 A1 présente un procédé et un système pour transcrire semi-automatiquement des traces. Le procédé met en oeuvre une validation de traces transcrites par application de règles de transcription. Aucun mécanisme d'enrichissement de règles de transcription n'est proposé. Seul est prévu la possibilité pour un usager d'être invité à ignorer ou à ajouter un élément nouveau dans un lexique de mots ou une liste d'événements acoustiques ou de symboles. Ainsi, la validation par les règles de transcription reste imparfaite. La seule possibilité d'évolution des règles de transcription impose une charge supplémentaire à un expert transcripteur et ainsi diminue la productivité de l'expert transcripteur.

Le document "WWWTranscribe - A MODULAR TRANSCRIPTION SYSTEM BASED ON THE WORLD WIDE WEB" (DRAXLER C.) ESCA Eurospeech97, Rhodes, GR, du 22 Septembre 1997 (22.09.1997) présente un système de transcription qui n'a aucune validation automatique.

La présente invention a pour objectif d'enrichir une base de données de règles de transcription afin d'améliorer la validité de trace transcrite et ainsi d'augmenter la qualité de transcription de trace sans recourir à des experts transcripteurs.

Pour atteindre cet objectif, un procédé pour enrichir une base de règles de transcription d'un premier serveur de gestion de base de données, comprenant dans un terminal de transcription connecté au premier serveur une étape de transcription d'une trace mémorisée dans un deuxième serveur de gestion de base de données connecté au terminal de transcription en une trace transcrite et mémorisée dans le deuxième serveur, et une étape de validation de la trace transcrite en appliquant des règles de transcription mémorisées dans la base de règles de transcription, ledit procédé étant caractérisé en ce qu'il comprend les étapes suivantes :
- transmettre un message de contrôle incluant un identificateur de la trace transcrite depuis le terminal de transcription à un terminal d'administration connecté aux premier et deuxième serveurs lorsque la trace transcrite est invalidée,
- contrôler dans le terminal d'administration si la trace transcrite invalidée correspondant à l'identificateur transmis doit être acceptée comme une trace transcrite validée, et
- construire une règle de transcription et l'ajouter dans la base de règles de transcription afin que ladite trace transcrite invalidée soit ultérieurement considérée comme une trace transcrite validée à l'étape de validation.

L'invention a aussi pour objet un système pour enrichir une base de règles de transcription, comprenant un premier serveur gérant la base de données de règles de transcription, un deuxième serveur de gestion de base de données et un terminal de transcription connecté aux premier et deuxième serveurs. Le terminal de transcription comprend un moyen pour transcrire une trace mémorisée dans le deuxième serveur en une trace transcrite et mémorisée dans le deuxième serveur, et un moyen pour valider la transcription de la trace transcrite en appliquant des règles de transcription mémorisées dans la base de règles de transcription. Le système est caractérisé en ce qu'il comprend :
- un moyen dans le terminal de transcription pour transmettre un message de contrôle incluant un identificateur de la trace transcrite à un terminal d'administration connecté aux premier et deuxième serveurs lorsque la trace transcrite est invalidée,
- un moyen dans le terminal d'administration pour contrôler si la trace transcrite invalidée doit être acceptée comme une trace transcrite validée, et
- un moyen dans le terminal d'administration pour construire une règle de transcription et l'ajouter dans la base de règles de transcription afin que ladite trace transcrite invalidée soit ultérieurement considérée comme une trace transcrite validée à l'étape de validation.

L'invention contrôle ainsi avantageusement dans des terminaux d'administration les traces transcrites par des terminaux de transcription et ainsi augmente la fiabilité et la pertinence de la validité des traces transcrites.

Un autre avantage de l'invention est d'enrichir de règles de transcription une base de données en ne ralentissant pas le travail de transcription depuis les terminaux de transcription, puisque l'adjonction d'une règle de transcription est réalisée par un terminal d'administration et non pas par un terminal de transcription. Par conséquent, le terminal de transcription peut continuer à transcrire sans se soucier du contrôle des traces transcrites.

Grâce à l'invention, les transcripteurs devant leurs terminaux de transcription bénéficient dynamiquement de l'adjonction de règles de transcription et d'une évolution des règles de transcription existantes.

D'autres caractéristiques et avantages de la présente invention apparaîtront plus clairement à la lecture de la description suivante d'une réalisation préférée de l'invention et de plusieurs variantes, données à titre d'exemples non limitatifs, en référence aux dessins annexés correspondants dans lesquels :
- la figure 1 est un bloc-diagramme schématique d'un système d'enrichissement semi-automatique d'une base de données de règles de transcription selon la réalisation préférée de l'invention ; et
- la figure 2 est un algorithme d'un procédé d'enrichissement semi-automatique de la base de données de règles de transcription selon la réalisation préférée de l'invention.

De manière générale, l'invention décrite ci-après est relative à une transcription de traces réalisées par des usagers appelés transcripteurs a priori non experts depuis des terminaux de transcription respectifs.

Une trace peut être une trace audio constituée par un segment audio d'un signal audio à transcrire en une trace audio transcrite qui est composée d'un message textuel résultant d'une transcription manuelle de la trace audio. Une trace audio comporte un ou plusieurs mots ou groupes de mots successifs séparés par des espaces incluant éventuellement des événements acoustiques. Dans une conversation de deux locuteurs ou réunion de plusieurs locuteurs, une trace audio ne provient que d'un locuteur. Une trace peut être aussi une trace transcrite telle que définie ci-dessus, composée d'un message textuel résultant par exemple d'un texte d'un message électronique ou d'une reconnaissance vocale d'une trace audio dans le signal audio, et est à transcrire en une trace transcrite modifiée, en tant que trace transcrite, qui résulte d'une modification du message textuel constituant la trace. Une trace peut être encore une trace transcrite ou transcrite modifiée à transcrire en une trace transcrite annotée ou transcrite modifiée annotée, en tant que trace transcrite, qui est composée de la trace et d'une annotation qui complète le sens de la trace par une observation difficilement classifiable sur la trace.

Une trace transcrite comprend par exemple des mots, des événements acoustiques, des symboles ou des signes.

Des règles de transcription sont par exemple des correspondances entre des mots et suites de mots de la trace transcrite et des mots et suites de mots dans des lexiques sélectionnés LM et des événements acoustiques et symboles dans des listes sélectionnées L1 et L2. Les lexiques et les listes ainsi que les règles de transcription ne sont modifiables que par des administrateurs. Les règles de transcription peuvent être également des règles d'écriture : par exemple, un événement acoustique de type long est obligatoirement représenté par une balise de début et une balise de fin, telles que des balises [musique] et [-musique].

Un évènement acoustique inclus entre des mots ou groupes de mots dans une trace est un son spécifique, par exemple un claquement de porte, un aboiement, un éternuement, un bruit de bouche, une sonnerie, etc. Un événement acoustique est défini par un type, un nom unique, un nom d'affichage et une balise de début, et éventuellement une balise de fin, une expression régulière et une description. Un événement acoustique est soit de type long, soit de type court. Un événement acoustique de type long comprend une balise de fin et une expression régulière, contrairement à un événement acoustique de type court. Un événement de type court est associé à un événement acoustique ponctuel tel qu'un éternuement. Un événement de type long est associé à un événement pendant lequel d'autres sons peuvent se produire tel que l'événement acoustique musique.

Un symbole est une abréviation d'un mot ou d'une expression et est défini par un identificateur de symbole à partir duquel une balise est formée. Un triplet (symbole, mot ou expression, identificateur) est par exemple : (cda, Côtes-d'Armor, @cda) ; (RP, Région Parisienne, @RP) ; (ft, France Télécom, @ft) .

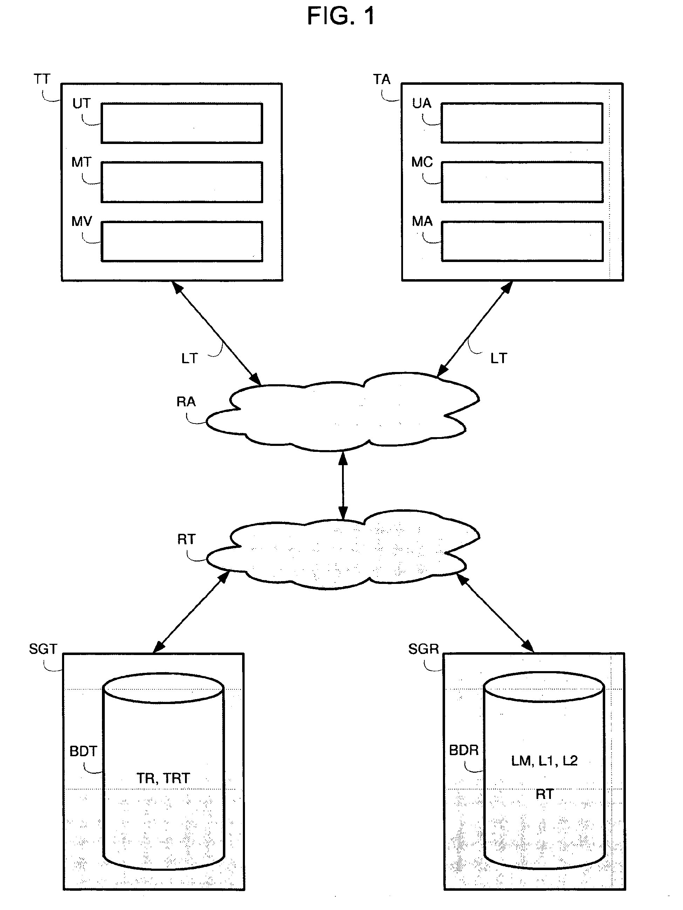

En référence à la figure 1, le système d'enrichissement mettant en oeuvre le procédé d'enrichissement selon la réalisation préférée de l'invention comprend un premier serveur de gestion de base de données SGR pour des règles de transcription, un deuxième serveur de gestion de base de données SGT pour des traces à transcrire et de traces transcrites, au moins un terminal de transcription TT et au moins un terminal d'administration TA. Des composants logiciels sont installés dans les terminaux de transcription TT et d'administration TA, tels que des ordinateurs personnels, et sont relatifs à des fonctionnalités de l'invention.

Le serveur SGR comprend une base de données de règles de transcription BDR, dans laquelle sont mémorisées des règles de transcription, des lexiques de mots LM, au moins une liste d'évènements acoustiques L1 et une liste de symboles L2.

Le serveur SGT gère une base de données de traces audio et/ou transcrites BDT. Initialement, soit des traces audio sont à transcrire manuellement en des traces transcrites, soit des traces déjà transcrites par un système de reconnaissance vocale sont à transcrire en des traces transcrites modifiées.

Les serveurs de gestion de base de données SGT et SGR sont reliés à un réseau de télécommunications à haut débit RT de type internet. Les serveurs SGT et SGR et les terminaux TT et TA communiquent à travers le réseau de télécommunications RT et des réseaux d'accès respectifs RA.

Chaque terminal TT, TA est connecté au réseau d'accès respectif RA à travers une liaison de télécommunications respective LT. La liaison LT et le réseau RA peuvent être classiquement une ligne téléphonique et le réseau téléphonique commuté RTC lui-même connecté au réseau de télécommunications RT. Selon d'autres variantes, la liaison de télécommunications LT est une ligne xDSL (Digital Subscriber Line) ou une ligne RNIS (Réseau Numérique à Intégration de Services) reliée au réseau d'accès correspondant. Les terminaux TT et TA sont par exemple des ordinateurs personnels reliés directement par des modems aux liaisons LT. Les terminaux de transcription, les terminaux d'administration et les réseaux d'accès ne sont pas limités aux exemples ci-dessus et peuvent être constitués par d'autres terminaux et réseaux d'accès connus.

Dans une variante, les serveurs de gestion de base de données SGT et SGR sont à proximité des terminaux de transcription TT et d'administration TA ou seulement des terminaux d'administration TA, et une liaison LT est par exemple une liaison câblée classique ou une liaison radio de faible portée.

Dans une autre variante, le terminal d'administration TA est confondu avec l'un des serveurs de gestion de base de données SGT et SGR.

Dans une autre variante, un terminal de transcription TT comprend une base de données de traces et une base de données de règles de transcription qui sont synchronisées régulièrement et respectivement avec les serveurs de gestion de base de données SGT et SGR.

Dans une autre variante, les serveurs de gestion de bases de données sont réunis en un unique serveur de gestion de base de données.

Le terminal de transcription TT relatif à un transcripteur comprend une unité centrale de traitement UT incluant une interface de communication avec le réseau d'accès respectif RA, un module de transcription de trace MT, un module de validation MV, et une interface de transcription (non montrée) comportant un transducteur électro-acoustique, tel qu'un haut-parleur associé à une carte audio ou tout autre moyen de restitution d'un signal audio, un clavier et un écran de visualisation.

Le terminal d'administration TA relatif à un administrateur du système d'enrichissement selon l'invention comprend une unité centrale de traitement UA incluant une interface de communication avec le réseau d'accès respectif RA, un module de contrôle de transcription MC, un module d'adjonction de règles de transcription MA, un clavier et un écran de visualisation (non montrés) .

Dans une variante, le terminal d'administration TA est un serveur d'administration incluant la base de données de traces BDT et la base de données de règles de transcription BDR.

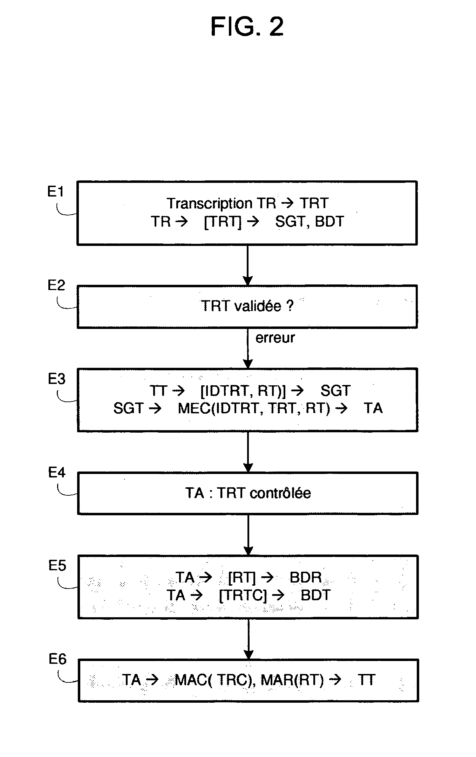

Comme montré à la figure 2, le procédé d'enrichissement selon l'invention comprend des étapes E1 à E6.

Initialement et selon le contexte des traces à transcrire, un administrateur définit des règles de transcriptions qui seront utilisées dans la validation de transcription de traces à transcrire par des terminaux de transcription. Par exemple, l'administrateur définit des lexiques de mots et des règles d'écritures à utiliser par le module de validation MV d'un terminal de transcription.

A l'étape E1, un terminal de transcription TT reçoit une trace TR mémorisée préalablement dans le serveur de gestion de base de données de traces SGT et le transcripteur du terminal TT la transcrit en une trace transcrite TRT par l'intermédiaire de l'interface de transcription et du module de transcription de trace MT. Le module de transcription MT transmet la trace transcrite TRT au serveur SGT qui mémorise la trace TRT transcrite dans la base de données de traces BDT. En supposant que la trace à transcrire TR est "je souhaite prendre un rendez vous chez le médecin euh le plus proche de chez m... près de la rue Danton", le résultat de la transcription TRT est par exemple "je souhaite prendre un rendez vous chez le médecin euh le plus proche de chez moi * près de la rue Danton".

A l'étape E2, le module de validation MV du terminal de transcription TT valide la trace transcrite TRT en appliquant les règles de transcription définies initialement et qui sont mémorisées dans la base de données de règles de transcription BDR. Dans l'exemple de l'étape E1, si le patronyme "Danton" n'est inclus dans aucun des lexiques L1 auxquels le transcripteur du terminal TT a accès et si une règle de transcription impose que le symbole astérisque "*" doit être accolé à un mot précédent transcrit, comme "moi", le module de validation indique une erreur de lexique par rapport au mot "Danton" et une erreur d'écriture par rapport à l'insertion de l'astérisque.

A l'étape E3, l'unité centrale UT du terminal de transcription TT transmet un message de contrôle MEC incluant un identificateur IDTRT de la trace transcrite TRT et la trace transcrite au terminal d'administration TA lorsque la trace transcrite est invalidée afin d'inviter le terminal d'administration à contrôler la trace transcrite. Le message de contrôle est soit transmis automatiquement, soit transmis semi-automatiquement après l'accord du transcripteur du terminal.

Dans une variante, le message de contrôle MEC inclut au moins une règle de transcription ajoutée RT en tant que proposition du transcripteur du terminal TT à l'administrateur du terminal TA. La proposition est par exemple l'adjonction d'un mot dans un lexique ou un perfectionnement d'une règle de transcription existante. Dans l'exemple de l'étape E1, le transcripteur propose l'adjonction du mot "Danton" dans un lexique et la modification de la règle de transcription liée à l'astérisque qui consiste en la possibilité de ne pas accoler l'astérisque au mot précédent transcrit.

Plus précisément, l'étape de transmettre E3 le message de contrôle MEC comprend une étape de transmettre l'identificateur IDTRT de la trace transcrite éventuellement avec une règle modifiée en tant que règle de transcription ajoutée depuis le terminal de transcription TT au serveur de gestion de base de données de trace SGT lorsque la trace transcrite est invalidée, et une étape de transmettre le message de contrôle MEC(IDTRT, TRT, RT) depuis le serveur SGT au terminal d'administration TA. Ainsi, le serveur SGT joue le rôle d'intermédiaire entre les terminaux de transcription TT et d'administration TA. Le message de contrôle MEC est alors mémorisé dans la base de données de traces BDT. L'unité centrale UA du terminal d'administration TA extrait le contenu du message de contrôle MEC transmis par le terminal de transcription TT pour être traité par le module de contrôle MC.

A l'étape E4, le module de contrôle MC dans le terminal d'administration TA contrôle la trace transcrite TRT correspondant à l'identificateur transmis IDTRT. Le module de contrôle MC affiche la trace transcrite à contrôler en fonction de l'identificateur de la trace transmise, et éventuellement la proposition du transcripteur. L'administrateur contrôle la trace et en déduit si la trace transcrite est acceptable et donc valide malgré le fait qu'elle présente des erreurs, ou si la trace transcrite est invalidée et doit être acceptée comme une trace transcrite validée. Dans l'exemple de l'étape E1, le module MC contrôle la trace transcrite par le terminal de transcription TT. L'administrateur estime au regard des règles de transcription existantes dans la base BDR que le mot "Danton" doit être ajouté dans un lexique relatif à des adresses et que la règle de transcription relative à l'astérisque doit être modifiée. Par exemple, la règle suivante relative à l'astérisque "MotAsterisque = Mot + "*" " est modifiée en la règle suivante {Mot Asterisque = Mot + "*" | Mot + " *"}, avec la barre verticale désignant une transcription.

A l'étape E5, le module d'adjonction MA dans le terminal TA construit une règle de transcription RT et l'ajoute dans la base de données de règles de transcription BDR lorsque la trace transcrite TRT après contrôle est considérée comme invalidée afin qu'à une éventuelle étape de validation de trace transcrite ultérieure la trace transcrite invalidée soit réputée être une trace transcrite validée. L'étape E5 est réalisée soit automatiquement soit semi-automatiquement par l'administrateur du terminal TA qui ajoute un mot dans un lexique, ou ajoute ou modifie une règle de transcription. Pour la réalisation automatique, le module d'adjonction MA peut analyser la trace transcrite après contrôle afin d'extraire la partie de la trace qui n'est pas valide par rapport aux règles préexistantes et déduire de cette partie une règle de transcription la validant. Une fois que la règle par exemple relative à l'astérisque a été modifiée, les modules de validation des terminaux de transcription TT acceptent la syntaxe de l'espace entre un mot transcrit et un astérisque.

Lorsque la trace transcrite après contrôle est considérée comme invalidée, le module d'adjonction MA la corrige en une trace transcrite corrigée TRTC pour la mémoriser et la transmettre au serveur de gestion de base de données de traces SGT qui la mémorise dans la base de données BDT.

A l'étape E6, un message d'avertissement de correction MAC comprenant la trace transcrite corrigée TRTC est transmis depuis le terminal d'administration TA au terminal de transcription TT et/ou un message d'avertissement de règle MAR comprenant la règle de transcription RT ajoutée ou modifiée est transmis depuis le terminal d'administration TA au moins au terminal de transcription TT. Le message d'avertissement de correction MAC n'est généralement transmis qu'au terminal de transcription concerné, tandis que le message d'avertissement de règles MAR est diffusé par le terminal d'administration TA vers tous les terminaux de transcription afin que tous les transcripteurs en prennent connaissance. Dans l'exemple de l'étape E1, le message d'avertissement de règle MAR pour l'adjonction de la règle relative à l'astérisque peut être "La règle relative à l'astérisque a été modifiée, voici sa nouvelle définition : Mot Asterisque = Mot + "*" | Mot + "*" ".

Les messages d'avertissement MAR sont généralement transmis aux terminaux par l'intermédiaire d'un serveur tel que le serveur de gestion de base de données de règles de transcription SGR.

L'invention décrite ici concerne un procédé et un système pour enrichir semi-automatiquement une base de données de règles de transcription. Selon une implémentation préférée, les étapes du procédé de l'invention sont déterminées par les instructions d'un premier programme d'ordinateur incorporé dans un premier dispositif informatique tel qu'un terminal d'administration TA et d'un deuxième programme d'ordinateur incorporé dans un deuxième dispositif informatique tel qu'un terminal de transcription TT. Le deuxième programme comprend des instructions de programme qui, lorsque ledit deuxième programme est chargé et exécuté dans le deuxième dispositif, transcrivent une trace TR mémorisée dans le serveur de gestion de base de données de traces SGT connecté au terminal de transcription TT et au terminal d'administration TA en une trace transcrite TRT, mémorisent la trace transcrite dans le serveur SGT et valident la trace transcrite en appliquant des règles de transcription mémorisées dans la base de données de règles de transcription BDR. Le premier programme d'ordinateur comprend des instructions de programme qui, lorsque ledit programme est chargé et exécuté dans le deuxième dispositif, traitent E3 un message de contrôle incluant un identificateur IDTRT de la trace transcrite TR et transmis par le terminal de transcription TT lorsque la trace transcrite est invalidée, contrôlent E4 si la trace transcrite invalidée correspondant à l'identificateur transmis doit être acceptée comme une trace transcrite validée, et construisent E5 une règle de transcription et l'ajoutent dans la base de données de règles de transcription BDR afin que ladite trace transcrite invalidée soit ultérieurement considérée comme une trace transcrite validée par les instructions de validation.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour enrichir une base de règles de transcription (BDR) d'un premier serveur de gestion de base de données (SGR), comprenant dans un terminal de transcription (TT) connecté au premier serveur une étape de transcription (E1) d'une trace (TR) mémorisée dans un deuxième serveur de gestion de base de données (SGT) connecté au terminal de transcription (TT) en une trace transcrite (TRT) et mémorisée dans le deuxième serveur, et une étape de validation (E2) de la trace transcrite en appliquant des règles de transcription mémorisées dans la base de règles de transcription, ledit procédé étant **caractérisé en ce qu'**il comprend les étapes suivantes
- transmettre (E3) un message de contrôle (MEC) incluant un identificateur (IDTRT) de la trace transcrite (TRT) depuis le terminal de transcription (TT) à un terminal d'administration (TA) connecté aux premier et deuxième serveurs (SGR, SGT) lorsque la trace transcrite est invalidée,
- contrôler (E4) dans le terminal d'administration si la trace transcrite invalidée correspondant à l'identificateur transmis doit être acceptée comme une trace transcrite validée, et
- construire (E5) une règle de transcription et l'ajouter dans la base de règles de transcription (BDR) afin que ladite trace transcrite invalidée soit ultérieurement considérée comme une trace transcrite validée à l'étape de validation.

2. Procédé conforme à la revendication 1, comprenant une étape de corriger et mémoriser (E5) la trace transcrite lorsque celle-ci après contrôle est considérée comme invalidée.

3. Procédé conforme à la revendication 2, selon lequel un message d'avertissement de correction (MAC) comprenant la trace transcrite corrigée (TRTC) est transmis (E6) depuis le terminal d'administration (TA) au terminal de transcription (TT).

4. Procédé conforme à l'une quelconque des revendications 1 à 3, selon lequel un message d'avertissement de règle (MAR) comprenant la règle de transcription ajoutée est transmis (E6) depuis le terminal d'administration (TA) au moins au terminal de transcription (TT).

5. Procédé conforme à l'une quelconque des revendications 1 à 4, selon lequel la règle de transcription ajoutée comprend une adjonction d'un mot dans un lexique.

6. Procédé conforme à l'une quelconque des revendications 1 à 5, selon lequel la règle de transcription ajoutée est une règle modifiée.

7. Procédé conforme à l'une quelconque des revendications 1 à 6, selon lequel l'étape de transmettre (E3) le message de contrôle (MEC) comprend une étape de transmettre l'identificateur (IDTRT) de la trace transcrite depuis le terminal de transcription (TT) au deuxième serveur (SGT) lorsque la trace transcrite est invalidée, et une étape de transmettre le message de contrôle (MEC) depuis le deuxième serveur (SGT) au terminal d'administration (TA).

8. Procédé conforme à l'une quelconque des revendications 1 à 7, selon lequel le message de contrôle (MEC) transmis depuis le terminal de transcription (TT) au terminal d'administration (TA) inclut au moins une règle de transcription en tant que proposition.

9. Système pour enrichir une base de règles de transcription (BDR), comprenant un premier serveur (SGR) gérant la base de données de règles de transcription, un deuxième serveur de gestion de base de données (SGT) et un terminal de transcription (TT) connecté aux premier et deuxième serveurs,
le terminal de transcription comprenant un moyen (MT) pour transcrire une trace (TR) mémorisée dans le deuxième serveur (SGT) en une trace transcrite (TRT) et mémorisée dans le deuxième serveur, et un moyen (MV) pour valider la transcription (TT) de la trace transcrite en appliquant des règles de transcription mémorisées dans la base de règles de transcription, ledit système étant **caractérisé en ce qu'**il comprend
- un moyen (UT) dans le terminal de transcription (TT) pour transmettre un message de contrôle (MEC) incluant un identificateur (IDTRT) de la trace transcrite (TRT) à un terminal d'administration (TA) connecté aux premier et deuxième serveurs (SGR, SGT) lorsque la trace transcrite est invalidée,
- un moyen (MC) dans le terminal d'administration (TA) pour contrôler si la trace transcrite invalidée doit être acceptée comme une trace transcrite validée, et
- un moyen (MA) dans le terminal d'administration (TA) pour construire une règle de transcription et l'ajouter dans la base de règles de transcription (BDR) afin que ladite trace transcrite invalidée soit ultérieurement considérée comme une trace transcrite validée à l'étape de validation.

10. Programme d'ordinateur apte à être mis en oeuvre dans un terminal d'administration (TA) pour enrichir une base de données de règles de transcription (BDR) d'un premier serveur de gestion de base de données (SGR) connecté au terminal d'administration et à un terminal de transcription (TT), le terminal de transcription comprenant des moyens pour transcrire (MT) une trace (TR) mémorisée dans un deuxième serveur de gestion de base de données (SGT) connecté au terminal de transcription (TT) et au terminal d'administration (TA) en une trace transcrite (TRT) et mémorisée dans le deuxième serveur de gestion et valider (MV) la trace transcrite en appliquant des règles de transcription mémorisées dans la base de données de règles de transcription,
ledit programme comprenant des instructions qui, lorsque le programme est chargé et exécuté dans ledit terminal d'administration (TA) :
- traitent (E3) un message de contrôle (MEC) incluant un identificateur (IDTRT) de la trace transcrite (TRT) et transmis par le terminal de transcription (TT) lorsque la trace transcrite est invalidée,
- contrôlent (E4) si la trace transcrite invalidée correspondant à l'identificateur transmis doit être acceptée comme une trace transcrite validée, et
- construisent (E5) une règle de transcription et l'ajoutent dans la base de règles de transcription (BDR) afin que ladite trace transcrite invalidée soit ultérieurement considérée comme une trace transcrite validée dans le moyen pour valider.

## Patentansprüche

1. Verfahren zum Anreichern einer Transkriptionsregelbank (BDR) eines ersten Datenbank-Verwaltungsservers (SGR), das in einem mit dem ersten Server verbundenen Transkriptionsendgerät (TT) einen Schritt der Transkription (E1) einer in einem zweiten mit dem Transkriptionsendgerät (TT) verbundenen Datenbank-Verwaltungsserver (SGT) gespeicherten Spur (TR) in eine transkribierte und im zweiten Server gespeicherte Spur (TRT) und einen Schritt der Validierung (E2) der transkribierten Spur enthält, indem in der Transkriptionsregelbank gespeicherte Transkriptionsregeln angewendet werden, **dadurch gekennzeichnet, dass** es die folgenden Schritte enthält:
- Übertragen (E3) einer eine Kennung (IDTRT) der transkribierten Spur (TRT) enthaltenden Kontrollnachricht (MEC) vom Transkriptionsendgerät (TT) an ein mit dem ersten und dem zweiten Server (SGR, SGT) verbundenes Verwaltungsendgerät (TA), wenn die transkribierte Spur invalidiert ist,
- Kontrolle (E4) im Verwaltungsendgerät, ob die der übertragenen Kennung entsprechende invalidierte transkribierte Spur als eine validierte transkribierte Spur akzeptiert werden soll, und
- Aufbau (E5) einer Transkriptionsregel und ihr Hinzufügen in die Transkriptionsregelbank (BDR), damit die invalidierte transkribierte Spur später im Validierungsschritt als eine validierte transkribierte Spur betrachtet wird.

2. Verfahren nach Anspruch 1, das einen Schritt der Korrektur und des Speicherns (E5) der transkribierten Spur enthält, wenn diese nach der Kontrolle als invalidiert betrachtet wird.

3. Verfahren nach Anspruch 2, gemäß dem eine die korrigierte transkribierte Spur (TRTC) enthaltende Korrekturbenachrichtungsmitteilung (MAC) vom Verwaltungsendgerät (TA) an das Transkriptionsendgerät (TT) übertragen wird (E6).

4. Verfahren nach einem der Ansprüche 1 bis 3, gemäß dem eine die hinzugefügte Transkriptionsregel enthaltende Regelbenachrichtungsmitteilung (MAR) vom Verwaltungsendgerät (TA) mindestens an das Transkriptionsendgerät (TT) übertragen wird (E6).

5. Verfahren nach einem der Ansprüche 1 bis 4, gemäß dem die hinzugefügte Transkriptionsregel eine Hinzufügung eines Worts in ein Wörterbuch enthält.

6. Verfahren nach einem der Ansprüche 1 bis 5, gemäß dem die hinzugefügte Transkriptionsregel eine abgewandelte Regel ist.

7. Verfahren nach einem der Ansprüche 1 bis 6, gemäß dem der Schritt der Übertragung (E3) der Kontrollmitteilung (MEC) einen Schritt der Übertragung der Kennung (IDTRT) der transkribierten Spur vom Transkriptionsendgerät (TT) zum zweiten Server (SGT), wenn die transkribierte Spur invalidiert ist, und einen Schritt der Übertragung der Kontrollmitteilung (MEC) vom zweiten Server (SGT) an das Verwaltungsendgerät (TA) enthält.

8. Verfahren nach einem der Ansprüche 1 bis 7, gemäß dem die vom Transkriptionsendgerät (TT) an das Verwaltungsendgerät (TA) übertragene Kontrollmitteilung (MEC) mindestens eine Transkriptionsregel als Vorschlag enthält.

9. System zum Anreichern einer Transkriptionsregelsbank (BDR), das einen die Transkriptionsregeldatenbank verwaltenden ersten Server (SGR), einen zweiten Datenbank-Verwaltungsserver (SGT) und ein Transkriptionsendgerät (TT) enthält, das mit dem ersten und dem zweiten Server verbunden ist, wobei das Transkriptionsendgerät eine Einrichtung (MT) zum Transkribieren einer im zweiten Server (SGT) gespeicherten Spur (TR) in eine transkribierte und im zweiten Speicher gespeicherte Spur (TRT) und eine Einrichtung (MV) zur Validierung der Transkription (TT) der transkribierten Spur enthält, indem in der Transkriptionsregelbank gespeicherte Transkriptionsregeln angewendet werden, wobei das System **dadurch gekennzeichnet ist, dass** es enthält:
- eine Einrichtung (UT) im Transkriptionsendgerät (TT), um eine eine Kennung (IDTRT) der transkribierten Spur (TRT) enthaltende Kontrollmitteilung (MEC) an ein mit dem ersten und mit dem zweiten Server (SGR, SGT) verbundenes Verwaltungsendgerät (TA) zu übertragen, wenn die transkribierte Spur invalidiert ist,
- eine Einrichtung (MC) im Verwaltungsendgerät (TA), um zu kontrollieren, ob die invalidierte transkribierte Spur als eine validierte transkribierte Spur akzeptiert werden soll, und
- eine Einrichtung (MA) im Verwaltungsendgerät (TA), um eine Transkriptionsregel zu erstellen und sie in die Transkriptionsregelbank (BDR) hinzuzufügen, damit die invalidierte transkribierte Spur später im Validierungsschritt als eine validierte transkribierte Spur betrachtet wird.

10. Computerprogramm, das in einem Verwaltungsendgerät (TA) durchgeführt werden kann, um eine Transkriptionsregeldatenbank (BDR) eines ersten Datenbank-Verwaltungsservers (SGR) anzureichern, der mit dem Verwaltungsendgerät und mit einem Transkriptionsendgerät (TT) verbunden ist, wobei das Transkriptionsendgerät Einrichtungen enthält, um eine in einem mit dem Transkriptionsendgerät (TT) und mit dem Verwaltungsendgerät (TA) verbundenen zweiten Datenbank-Verwaltungsserver (SGT) gespeicherte Spur (TR) in eine transkribierte und im zweiten Verwaltungsserver gespeicherte Spur (TRT) zu transkribieren (MT), und die transkribierte Spur zu validieren (MV), indem in der Transkriptionsregeldatenbank gespeicherte Transkriptionsregeln angewendet werden,
wobei das Programm Anweisungen enthält, die, wenn das Programm in das Verwaltungsendgerät (TA) geladen und dort ausgeführt wird:
- eine Kontrollmitteilung (MEC) verarbeiten (E3), die eine Kennung (IDTRT) der transkribierten Spur (TRT) enthält und vom Transkriptionsendgerät (TT) übertragen wird, wenn die transkribierte Spur invalidiert ist,
- kontrollieren (E4), ob die der übertragenen Kennung entsprechende invalidierte transkribierte Spur als eine validierte transkribierte Spur akzeptiert werden soll, und
- eine Transkriptionsregel erstellen (E5) und sie in die Transkriptionsregelbank (BDR) hinzufügen, damit die invalidierte transkribierte Spur später in der Einrichtung zur Validierung als eine validierte transkribierte Spur betrachtet wird.

## Claims

1. Method for enriching a transcription rule base (BDR) of a first database management server (SGR), comprising in a transcriber terminal (TT) connected to the first server a step of transcribing (E1) a trace (TR) stored in a second database management server (SGT) connected to the transcriber terminal (TT) into a transcribed trace (TRT) stored in the second server and a step of validating (E2) the transcribed trace by applying transcription rules stored in the transcription rule base, said method being **characterized in that** it comprises the following steps:
- transmitting (E3) a control message (MEC) including an identifier (IDTRT) of the transcribed trace (TRT) from the transcriber terminal (TT) to an administrator terminal (TA) connected to the first and second servers (SGR, SGT) if the transcribed trace is invalidated,
- checking (E4) in the administrator terminal, whether the invalidated transcribed trace corresponding to the transmitted identifier must be accepted as a validated transcribed trace, and
- constructing (E5) a transcription rule and adding it to the transcription rule base (BDR) in order for said invalidated transcribed trace to be thereafter considered as a transcribed trace validated in the validation step.

2. Method according to Claim 1, including a step of correcting and storing (E5) the transcribed trace if, after checking, it is considered to be invalidated.

3. Method according to Claim 2, wherein a correction warning message (MAC) including the corrected transcribed trace (TRTC) is transmitted (E6) from the administrator terminal (TA) to the transcriber terminal (TT).

4. Method according to any one of Claims 1 to 3, wherein a rule warning message (MAR) including the added transcription rule is transmitted (E6) from the administrator terminal (TA) at least to the transcriber terminal (TT).

5. Method according to any one of Claims 1 to 4, wherein the added transcription rule comprises adding a word to a lexicon.

6. Method according to any one of Claims 1 to 5, wherein the added transcription rule is a modified rule.

7. Method according to any one of Claims 1 to 6, wherein the step (E3) of transmitting the control message (MEC) comprises a step of transmitting the identifier (IDTRT) of the transcribed trace from the transcriber terminal (TT) to the second server (SGT) if the transcribed trace is invalidated, and a step of transmitting the control message (MEC) from the second server (SGT) to the administrator terminal (TA).

8. Method according to any one of Claims 1 to 7, wherein the control message (MEC) transmitted from the transcriber terminal (TT) to the administrator terminal (TA) includes at least one transcription rule in respect of a proposal.

9. System for enriching a transcription rule base (BDR), comprising a first server (SGR) for transcription rule database management, a second server (SGT) for database management and a transcriber terminal (TT) connected to the first and second servers,
the transcriber terminal including means (MT) for transcribing a trace (TR) stored in the second server (SGT) into a transcribed trace (TRT) stored in the second server and means (MV) for validating the transcription (TT) of the transcribed trace by applying transcription rules stored in the transcription rule base, said system being **characterized in that** it comprises:
- means (UT) in the transcriber terminal (TT) for transmitting a control message (MEC) including an identifier (IDTRT) of the transcribed trace (TRT) to an administrator terminal (TA) connected to the first and second servers (SGR, SGT) if the transcribed trace is invalidated,
- means (MC) in the administrator terminal (TA) for checking if the invalidated transcribed trace must be accepted as a validated transcribed trace, and
- means (MA) in the administrator terminal (TA) for constructing a transcription rule and adding it to the transcription rule base (BDR) in order for said invalidated transcribed trace to be thereafter considered as a transcribed trace validated in the validation step.

10. Computer program adapted to be used in an administrator terminal (TA) to enrich a transcription rule database (BDR) of a first database management server (SGR) connected to the administrator terminal and to a transcriber terminal (TT), the transcriber terminal including means for transcribing (MT) a trace (TR) stored in a second database management server (SGT) connected to the transcriber terminal (TT) and to the administrator terminal (TA) into a transcribed trace (TRT) stored in the second management server and for validating (MV) the transcribed trace by applying transcription rules stored in the transcription rule database,
said program comprising instructions which, when the program is loaded into and executed in said administrator terminal (TA):
- process (E3) a control message (MEC) including an identifier (IDTRT) of the transcribed trace (TRT) and transmitted by the transcriber terminal (TT) if the transcribed trace is invalidated,
- check (E4) whether the invalidated transcribed trace corresponding to the transmitted identifier must be accepted as a validated transcribed trace, and
- construct (E5) a transcription rule and add it to the transcription rule base (BDR) in order for said invalidated transcribed trace to be thereafter considered as a transcribed trace validated in the validation means.
